(19) **Europäisches Patentamt**

**European Patent Office**

**Office européen des brevets**

(11) **EP 1 067 728 A2**

(12) **EUROPÄISCHE PATENTANMELDUNG**

(43) Veröffentlichungstag:
**10.01.2001 Patentblatt 2001/02**

(51) Int. Cl.$^7$: **H04L 1/00**, H04Q 7/20

(21) Anmeldenummer: **00113677.9**

(22) Anmeldetag: **28.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.07.1999 DE 19931236**

(71) Anmelder:
**SIEMENS AKTIENGESELLSCHAFT**
**80333 München (DE)**

(72) Erfinder: **Kröner, Hans**
**73312 Geislingen (DE)**

(54) **Verfahren zur Zuweisung von Übertragungskapazität zu Verbindungen in einem Funk-Kommunikationssystem**

(57)　Erfindungsgemäß wird einer Verbindung zwischen einer Basisfunkstation und einer Teilnehmerstation eine Übertragungsrate für eine Signalübertragung von der Basisfunkstation zu der Teilnehmerstation abhängig von einer verbindungsindividuellen Pfaddämpfung zugewiesen.

Fig. 2

**Beschreibung**

Die Erfindung betrifft ein Verfahren zur Zuweisung von Übertragungskapazität zu Verbindungen in einem Funk-Kommunikationssystem, insbesondere in einem Mobilfunksystem oder drahtlosen Teilnehmeranschlußsystem.

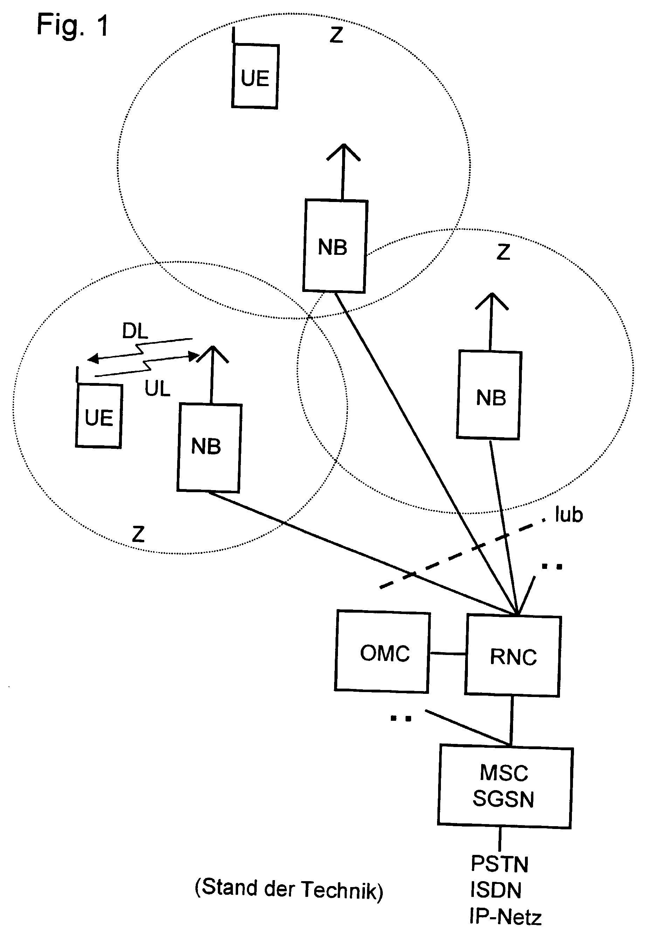

In einem Funk-Kommunikationssystemen werden Daten, beispielsweise eines Sprach- oder Multimediadienstes, mittels elektromagnetischer Wellen übertragen. Das Abstrahlen der elektromagnetischen Wellen erfolgt dabei mit Trägerfrequenzen, die in dem für das jeweilige System vorgesehenen Frequenzband liegen. Über eine Funkschnittstelle werden Verbindungen zwischen mindestens einer Basisfunkstation NB (Node B) und mehreren Teilnehmerstationen UE (User Equipment), die mobile oder auch ortsfeste Sende- und Empfangsgeräte sein können und die untersten Glieder des Systems sind, hergestellt. Eine Basisfunkstation NB versorgt eine bis zu mehrere Quadratkilometer große Fläche, eine sogenannte Funkzelle Z, mit funktechnischen Ressourcen. Durch die räumliche Begrenzung einer Funkzelle läßt sich die begrenzte Ressource Trägerfrequenzen in einer gewissen Entfernung zur gleichen Zeit wiederverwenden, ohne daß sich die Funkkanäle gegenseitig stören. Mehrere Funkzellen Z bilden hierfür ein gemeinsam von einer Funknetzsteuerung RNC (Radio Network Controller) verwaltetes Cluster. Mehrere Funknetzsteuerungen RNC wiederum sind über eine Mobilvermittlungseinrichtung MSC (Mobile Switching Center) bzw. Serving GPRS Service Node (SGSN) verbunden, über die u.a. der Zugang zum analogen und digitalen Festnetz PSTN, ISDN, in ein Paketvermittlungsnetz, insbesondere ein IP-Netz, oder in ein weiteres Mobilfunknetz erfolgt. In Fig. 1 ist ein derartiges zellulares Funknetz schematisch dargestellt.

Um den Bedarf des zur Verfügung stehenden Spektrums an der knappen Ressource „Trägerfrequenzen" besser zu decken, wurden synchrone Multiplexverfahren auf der Basis eines frequenz-, zeit- und/oder spreizkodeselektiven Vielfachzugriffs zur Verteilung der Übertragungskapazität eines Funkkanals auf mehrere Verbindungen eingeführt, die entsprechend mit FDMA (Frequency Division Multiple Access), TDMA (Time Division Multiple Access) und CDMA (Code Division Multiple Access) bezeichnet werden. Hierzu wird in Absprache zwischen Sender und Empfänger unter Einbeziehung der Basisfunkstationen ein vorgegebenes Raster aus sende- und empfangssynchronen Frequenzbändern, Zeitschlitzen und/oder Kodesequenzen genutzt. Die Sender ordnen die Daten der einzelnen Verbindungen diesem Raster zu und die Empfänger separieren aus dem empfangenen Datenstrom die für sie bestimmten Daten. Nachteilig an diesem synchronen Multiplexverfahren ist, daß die Übertragungskapazität einer solchen leitungsvermittelten Verbindung durch das Multiplexraster fest vorgegeben ist und auch dann, wenn momentan keine Übertragungskapazität benötigt wird, diese nicht für andere Funkübertragungen freigegeben werden kann.

Ein weiteres grundsätzliches Verfahren ist die Paketvermittlung. Sie beruht auf der gemeinsamen Nutzung eines Funkkanals mit hoher Übertragungskapazität durch mehrere verschiedene Verbindungen. Auch hierfür wird der Funkkanal auf der Zeitachse unterteilt, allerdings nicht in feste Zeitschlitze, sondern in adressierte Datenpakete variabler Länge. Die Daten werden zeitvariant übertragen, weshalb man auch von einem asynchronen Multiplex-Verfahren sprechen kann. Jeder Sender kann jederzeit auf die bis dahin ungenutzte Übertragungskapazität zugreifen und seine Daten z.B. nach einem stochastischen Zugriffsverfahren übertragen. Außerdem läßt sich die Datenrate eines Bearers sehr leicht stufenlos variieren. Der Sender kann die Datenrate sowohl dadurch beeinflussen, in welchen zeitlichen Abständen er die Datenpakete sendet, als auch durch deren Länge.

Zukünftige Mobilfunksysteme, wie das UMTS (Universal Mobile Telecommunication System), werden den Funkteilnehmern eine Vielzahl unterschiedlicher Dienste mit unterschiedlichen Datenraten anbieten. Neben der reinen Sprachübertragung werden Multimedia-Anwendungen mit der einhergehenden Dienstevielfalt einen großen Teil des Datenaufkommens ausmachen. Die Paketdatenübertragung auf der Funkschnittstelle ist hier besonders vielversprechend.

Zur bidirektionalen Nachrichtenübertragung in Aufwärtsrichtung (Uplink) und Abwärtsrichtung (Downlink) sind in dem UMTS-Funk-Kommunikationssystem sowohl der sogenannte TDD-Modus (TDD = Zeitduplex), eine Kombination eines Breitband-TDMA/FDMA-Systems mit einem CDMA-System, als auch der FDD-Modus (FDD = Frequenzduplex), ein Breitband-CDMA-System (W-CDMA), vorgesehen. Die beiden Modi versprechen eine hohe Flexibilität und Effizienz in Hinblick auf unterschiedliche Datenraten und Anforderungen an die Dienstgüte (QoS Quality of Service). Dieses wird insbesondere durch das Code Division Multiple Access Verfahren (CDMA) erreicht, bei dem jeder Träger eine unterschiedliche Kombination kurzer und langer Kodesequenzen für die Übermittlung von Nachrichten zwischen Funkstationen verwendet. Der Empfänger stellt einen einzelnen Träger wieder her, indem er den empfangenen Datenstrom mit den passenden kurzen und langen Kodesequenzen korreliert. Dieses Zugriffsverfahren stellt eine sehr flexible Zuteilung von Funkkanal-Ressourcen zur Verfügung, da es Träger mit unterschiedlichen Spitzenwerten für die Datenrate und Träger mit variablen Datenraten unterstützt.

Aufgabe der Erfindung ist es, ein Verfahren anzugeben, das durch eine verbesserte Zuweisung von Übertragungskapazität zu Verbindungen eine effiziente Nutzung der zur Verfügung stehenden Übertragungskapazität ermöglicht. Diese Aufgabe wird von dem Verfahren nach dem unabhängigen Anspruch 1 sowie von dem Funk-Kommunikationssystem nach dem unabhängigen Anspruch 28 erfüllt. Vorteilhafte Ausgestaltungen der Erfindung sind den abhängigen Ansprüchen zu entnehmen.

Erfindungsgemäß wird einer Verbindung zwischen einer Basisfunkstation und einer Teilnehmerstation eine Übertragungsrate für eine Signalübertragung in Abwärtsrichtung von der Basisfunkstation zu der Teilnehmerstation abhängig von einer verbindungsindividuellen Pfaddämpfung zugewiesen.

Ausführungsbeispiele der Erfindung werden anhand der Figuren sowie basierend auf dem Dokument 3GPP, TSG RAN WG 2 „Radio Interface Protocol Architecture", TS RAN S2.01 v0.1.0, February 1999, näher erläutert.

Dabei zeigen

Fig. 1     eine schematische Darstellung eines Funk-Kommunikationssystems, insbesondere eines Mobilfunksystems,

Fig. 2     ein Blockschaltbild einer beispielhaften Konstellation von zwei Teilnehmerstationen innerhalb einer Funkzelle einer Basisfunkstation, und

Fig. 3     einen Vergleich dreier Strategien zur Zuweisung von Übertragungsraten zu Verbindungen.

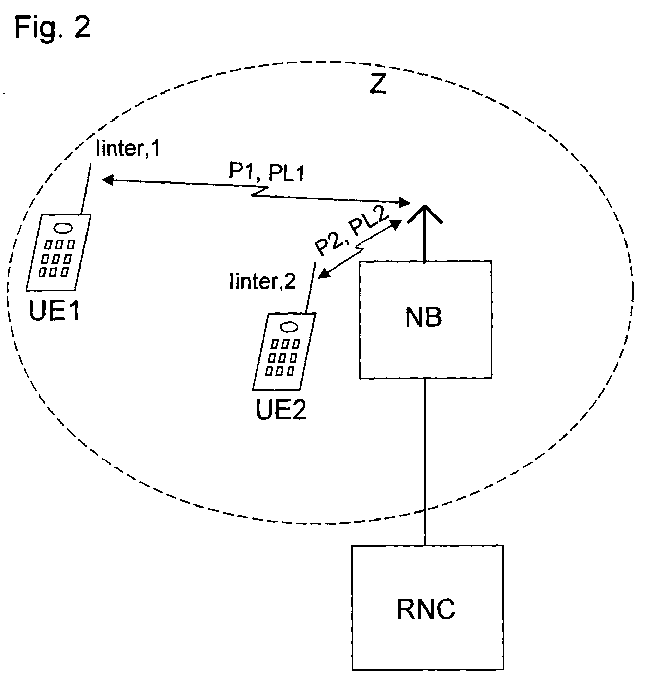

Die Fig. 2 zeigt eine beispielhafte Konstellation, bei der sich eine erste Teilnehmerstation UE1 in einer großen Distanz zu einer Basisfunkstation NB bzw. nahe der Funkzellgrenze und sich eine zweite Teilnehmerstation UE2 nahe der Basisfunkstation NB befindet. Zunächst wird nur der Fall einer Signalübertragung in Abwärtsrichtung DL betrachtet. Angenommen wird ferner, daß das Funk-Kommunikationssystem ein CDMA-Teilnehmerseparierungsverfahren unterstützt, wobei in der Abwärtsrichtung orthogonale CDMA-Kodes verwendet werden.

Wie die nachfolgende Beschreibung offenbart, berücksichtigt das erfindungsgemäße Verfahren die besondere Eigenschaft einer Funkübertragung, daß die notwendige Sendeleistung P1, P2 mit der Pfaddämpfung PL1, PL2 zwischen der Basisfunkstation NB und der jeweiligen Teilnehmerstation UE1, UE2 ansteigt. Da die Systemkapazität des Funk-Kommunikationssystems vorwiegend durch Interferenzeffekte beschränkt ist, benötigt die zweite Teilnehmerstation UE2 mit einer geringen Pfaddämpfung PL2 nur einen verhältnismäßig geringen Anteil der gesamten Sendeleistung für die Abwärtsrichtung DL und einen geringen Anteil der auf der Funkschnittstelle zur Verfügung stehenden Ressourcen, unabhängig von der realen Übertragungsrate.

Die Interferenz ist durch die gesamte Sendeleistung am Ort der Basisfunkstation NB gegeben. Die Interferenz am Aufenthaltsort der ersten Teilnehmerstation UE1 an der Grenze der Funkzelle Z ist hauptsächlich durch ein Empfängerrauschen No und eine von Basisfunkstationen NB in Nachbarfunkzellen Z verursachte Interzell-Interferenz Iinter,1 gegeben, währenddessen die Interferenz am Aufenthaltsort der zweiten Teilnehmerstation UE2 nahe der Basisfunkstation NB hauptsächlich durch eine von weiteren Teilnehmerstationen UE in der gleichen Funkzelle Z verursachte Intrazell-Interferenz und nur zu einem geringen Anteil durch eine Interzell-Interferenz Iinter,2 gegeben ist.

Die Sendeleistung P2 für die Signalübertragung zu der zweiten Teilnehmerstation UE2 nahe der Basisfunkstation NB trägt also nur einen sehr geringen Teil zu der gesamten Interferenz innerhalb der Funkzelle Z bei.

Für die beschriebene Konstellation wird nachfolgend ein Signal-Interferenz-Verhältnis SIR1, SIR2 für die beiden Teilnehmerstationen UE1, UE2 sowie ein Verhältnis der Sendeleistungen P1, P2 ermittelt.

Neben den beschriebenen Parametern Sendeleistung P1, P2, Interzell-Interferenz Iinter,1, Iinter,2 und Empfängerrauschen No wird ein Verarbeitungsgewinn PG1, PG2 (Processing Gain), der durch eine Entspreizung und Dekodierung des empfangenen Signals erzielt wird, sowie ein Orthogonalitätsfaktor OF1, OF2, der die Unterdrückung der Intrazell-Interferenz aufgrund der Verwendung von orthogonalen Spreizkodes beschreibt, betrachtet. Der Verarbeitungsgewinn PG1, PG2 ist als das jeweilige Verhältnis zwischen der Chiprate und Nettodatenrate des jeweiligen Trägers definiert. Der Orthogonalitätsfaktor OF1, OF2 ist abhängig von Laufzeitunterschieden der Signale und dementsprechend kleiner für die zweite Teilnehmerstation UE2 nahe der Basisfunkstation NB.

Unter der Annahme, daß PL1 >> PL2 und somit P1 >> P2 ist, kann das Signal-Interferenz-Verhältnis SIR1 für die erste Teilnehmerstation UE1 folgendermaßen ermittelt werden: 1/

$$SIR1 \approx \frac{PG1 \cdot PL1}{No + Iinter,1} \tag{1}$$

Unter Vernachlässigung des Empfängerrauschens No sowie der Interzell-Interferenz Iinter,2 kann das Signal-Interferenz-Verhältnis SIR2 für die zweite Teilnehmerstation UE2 folgendermaßen ermittelt werden:

$$SIR2 \approx \frac{PG2 \cdot P2/PL2}{OF2 \cdot P1/PL2} = \frac{PG2 \cdot P2}{OF2 \cdot P1} \tag{2}$$

Aus (2) ergibt sich somit das Verhältnis zwischen den Sendeleistungen:

$$\frac{P2}{P1} = \frac{SIR2}{PG2} \cdot OF2 \tag{3}$$

Bei einem beispielhaften Verarbeitungsgewinn von 512 für eine Sprachverbindung, einem Signal-Interferenz-Verhältnis von 4 bzw. 6dB und einem Orthogonalitätsfaktor von 0,1 ergibt sich ein Verhältnis der Sendeleistungen von 1/1280. Dieses belegt, daß die zweite Teilnehmerstation UE2 nur marginal zu der gesamten Sendeleistung in Abwärtsrichtung DL beiträgt und somit auch nur eine sehr geringe Interferenz in der Funkzelle Z verursacht.

Die Berücksichtigung dieser Erkenntnis ermöglicht eine erfindungsgemäße effektivere Nutzung der Übertragungsressourcen. So kann beispielsweise die Sendeleistung P2 bzw. das Signal-Rausch-Verhältnis für die Verbindung zu der zweiten Teilnehmerstation UE2 zur Verbesserung der Übertragungsqualität erhöht werden, ohne daß negative Auswirkungen auf die Interferenz in der Abwärtsrichtung DL auftreten. Weiterhin kann beispielsweise die Übertragungsrate für die Verbindung zu der zweiten Teilnehmerstationen UE2 erhöht werden, ohne daß die effektive Systembelastung ansteigt. Dieses Verfahren kann vorteilhaft für Nicht-Echtzeit-Dienste, die ihre Übertragungsrate an die jeweils aktuell vorhandenen Ressourcen adaptiv anpassen können, angewendet werden. In gleicher Weise kann das Verfahren für Echtzeit-Dienste wie beispielsweise Sprachübertragung eingesetzt werden, wenn beispielsweise eine sogenannte adaptive Multiratenkodierung (AMR - Adaptive Multirate-Coding) unterstützt wird. Für den Fall einer hohen Systembelastung oder einer Blockierung - beispielsweise wenn die erforderliche Sendeleistung die maximale Sendeleistung der Basisfunkstation NB übersteigt, können die Anforderungen für Dienste mit einem hohen Pfadverlust verringert werden. Dieses kann beispielsweise durch eine Reduzierung der Datenrate oder des angestrebten Signal-Interferenz-Verhältnisses erfolgen.

Eine Erhöhung der Übertragungskapazität für die Abwärtsrichtung DL ist deshalb besonders bedeutsam, weil viele Datendienste, beispielsweise von Datenbankanbietern, stark asymmetrische Anforderungen aufweisen, das heißt, die Datenmenge und somit die Verkehrsbelastung in der Abwärtsrichtung DL ist viel höher als die Verkehrsbelastung in der Aufwärtsrichtung UL. Ein verbesserter Durchsatz in der Abwärtsrichtung DL ist deshalb gleichbedeutend mit einer größeren Anzahl von Trägern, die innerhalb der Funkzelle Z zur Verfügung gestellt werden können, wodurch die effektive Übertragungskapazität erhöht wird.

Für die Zuweisung einer Übertragungsrate B zu einer Verbindung können verschiedene Strategien angewendet werden.

Gemäß einer ersten bekannten Strategie wird allen Trägern eine gleiche Übertragungsrate B unabhängig von der effektiven Pfaddämpfung zugewiesen. Hierbei weisen alle Träger identische charakteristische Merkmale wie beispielsweise das Signal-Interferenz-Verhältnis SIR und den Verarbeitungsgewinn PG auf. Diese Zuweisung führt einerseits zu einer asymmetrischen Verteilung der Sendeleistungen, andererseits jedoch zu einer konstanten Übertragungsrate B und Dienstequalität QoS für alle Teilnehmer.

Gemäß einer zweiten Strategie für die Zuweisung von Übertragungsraten B zu Trägern wird die unterschiedliche Pfaddämpfung PL der jeweiligen Teilnehmerstationen UE berücksichtigt. Einer Verbindung mit einer geringeren Pfaddämpfung PL kann beispielsweise eine höhere Übertragungsrate B zugewiesen werden. Dieses führt zu einer geringeren Variation der Sendeleistung für die einzelnen Verbindungen sowie, wie vorangehend beschrieben, zu einer optimierten Nutzung der zur Verfügung stehenden Ressourcen. Dieses Verfahren kann für Verbindungen verwendet werden, bei denen die Übertragungsrate zumindest eines Dienstes variieren kann.

Der allgemeine funktionelle Zusammenhang, daß die Übertragungsrate B eine Funktion der jeweiligen Pfaddämpfung PL ist, kann dazu verwendet werden, die Übertragungsrate Bi eines Trägers i als eine Funktion der jeweiligen Pfaddämpfung PLi in der Abwärtsrichtung DL zu definieren. Hierbei kann beispielsweise ein Vergleich der aktuellen Pfaddämpfung mit einem Schwellwert PLthreshold durchgeführt werden, wobei ein jeweiliges Spektrum von Pfaddämpfungen einer bestimmte Übertragungsrate entspricht. Die jeweilige Übertragungsrate Bi für den Träger i wird somit durch eine Basis-Übertragungsrate B multipliziert mit einem Faktor n für ein jeweiliges Spektrum von Pfaddämpfungen ermittelt:

$$Bi = n \cdot B \text{ für } PLthreshold,n \geq PLi > PLthreshold,n+1 \qquad (4)$$

Für ein Breitband-CDMA-System kann beispielsweise auch eine jeweilige Verdoppelung der Übertragungsrate Bi des jeweiligen Trägers i entsprechend folgender Gleichung vorgesehen werden:

$$Bi = 2^{(n-1)} \cdot B \text{ für } PLthreshold,n \geq PLi > PLthreshold,n+1 \qquad (5)$$

Gemäß einer weiteren alternativen Strategie für die Zuweisung von Übertragungsraten zu Trägern wird die relative oder absolute Sendeleistung Pi, die für einen jeweiligen Träger i benötigt wird, berücksichtigt. Die relative Sendeleistung Pi ist dabei das Verhältnis der Sendeleistung Pi zu der Gesamt-Sendeleistung der Basisfunkstation NB. Somit ist die Übertragungsrate Bi des Trägers i eine Funktion dieses Verhältnisses.

Das folgende zahlenmäßige Beispiel offenbart, wie die Gesamt-Übertragungsrate in kbit/s in einer Funkzelle Z bei einer Anwendung der beschriebenen erfindungsgemäßen zweiten Strategie zur Zuweisung von Übertragungsraten zu Verbindungen im Vergleich zu der bekannten ersten Strategie mit einer gleichen Übertragungsrate für alle Verbindungen erhöht werden kann. Des weiteren ist das Ergebnis einer dritten Strategie dargestellt, bei der die Übertragungsrate einer Verbindung zufällig und unabhängig von einer Pfaddämpfung ausgewählt wird.

Bei der beispielhaften Berechnung wird von folgenden Anforderungen an die Funkschnittstelle ausgegangen:

| | |
|---|---|
| Umgebung | Wohnbereich, Wohnviertel |
| Mobilität | Fußgänger |
| Funkzelle | Mikrozelle |

Für diese Anforderungen werden zudem folgende Systemparameter zugrunde gelegt:

| | |
|---|---|
| Anzahl der Träger | 40 |
| SIR | 4 (6dB) |
| Basis-Übertragungsrate B | 8 kbit/s |
| Verarbeitungsgewinn PG | 512 |
| Orthogonalitätsfaktor | 0,06 |
| Standardabweichung des log-normalverteilten Fading | 10 dB |
| Interferenz-Kopplung | 2 |
| Basis-Pfaddämpfung PL | 127 dB |
| Funkzellenradius | 300 m |
| Empfängerrauschen No | -102 dBm |

Weiterhin wird von einer gleichmäßigen Verteilung der Teilnehmerstationen in der Funkzelle ausgegangen - die Wahrscheinlichkeit, daß sich eine Teilnehmerstation in einer bestimmten Entfernung aufhält, steigt linear mit der Entfernung.

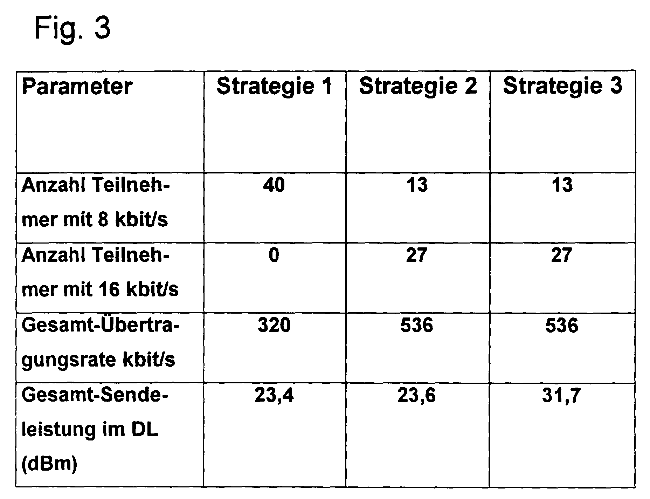

Das jeweilige Ergebnis der drei Zuweisungs-Strategien ist in der Tabelle der Fig. 3 offenbart.

Für das Ergebnis der Strategie 2, also der von der jeweiligen Pfaddämpfung abhängigen Zuweisung von Übertragunsgraten, wurde eine Übertragungsrate von 8 kbit/s bei einer Pfaddämpfung PL >120 dB gewählt, während eine Übertragungsrate von 16 kbit/s bei einer Pfaddämpfung ≤120 dB gewählt wurde. Bei der Strategie 3 entspricht die Anzahl der Teilnehmer pro Übertragungsrate der jeweiligen Anzahl der Strategie 2.

Deutlich ist den Ergebnissen erkennbar, daß sich bei der Strategie 2 die Gesamt-Übertragungsrate in kbit/s erhöht hat, wobei sich die Gesamt-Sendeleistung nur marginal erhöht hat. Zur Erreichung der gleichen Gesamt-Übertragungsrate ist bei der dritten Strategie eine wesentlich höhere Gesamt-Sendeleistung erforderlich.

Bei dem Ergebnis der Strategie 2 ist zu berücksichtigen, daß bei der pfaddämpfungsabhängigen Zuweisung eine Erhöhung der Übertragungsrate auf 16 kbit/s eine entsprechende Erhöhung der Sendeleistung um ca. 3 dB erfordert, währenddessen die Anforderungen an die Sendeleistung für die niedrigere Übertragungsrate von 8 kbit/s nahezu identisch sind. Hierdurch tritt eine Angleichung der einzelnen Sendeleistungen bei einer nur marginalen Erhöhung der Gesamt-Sendeleistung auf.

Im folgenden wird eine beispielhafte netzseitige Implementierung des erfindungsgemäßen Verfahrens beschrieben. Hierbei wird entsprechend dem oben genannten Dokument „Radio Interface Protocol Architecture" die Schichten- und Protokollstruktur des UMTS-Mobilfunksystems der dritten Generation zugrunde gelegt.

Die Implementierung des Verfahrens kann auf zwei verschiedene Weisen erfolgen, wobei zwischen einer langfristigen- und einer kurzfristigen Ressourcen-Zuweisung unterschieden wird.

Die beschriebenen beispielhaften Implementierungen basieren auf einer Steuerung der Zuweisung von Übertragungsraten zu Verbindungen für die Signalübertragung in Abwärtsrichtung DL, wobei von einer Verwendung von orthogonalen Spreizkodes für die Abwärtsrichtung ausgegangen wird. Die Nutzung orthogonaler Spreizkodes oder aber auch eines empfangsseitigen Joint-Detection-Verfahrens bewirken eine Unterdrückung der Intrazell-Interferenz, wodurch die Gesamt-Übertragungskapazität hauptsächlich von der Interzell-Interferenz abhängt. Allgemein kann definiert werden, daß einer Teilnehmerstation, deren Interferenzsituation vorwiegend durch eine Interzell-Interferenz determiniert ist, eine relativ niedrige Übertragungsrate zugewiesen werden sollte, währenddessen einer Teilnehmerstation, deren Interferenzsituation vorwiegend durch Intrazell-Interferenz determiniert ist, eine höhere Übertragungsrate zugewiesen werden sollte.

Die Implementierung des Verfahrens kann für den Fall der langfristigen Ressourcen-Zuweisung beispielsweise innerhalb der Radio Resource Control (RRC) - Funktion erfolgen. Die RRC-Funktion ist gemäß dem ISO-OSI-Schichtenmodell, das für eine weitgehende Standardisierung von Kommunikationssystemen geschaffen wurde, eine Schicht 3-Funktion.

Bei einem Verbindungsaufbau wird abhängig von einer zur Verfügung stehenden Bandbreite und QoS-Anforderungen für jeden Träger ein sogenannter Satz von Übertragungsformaten (Transport Format Set) definiert, der einen Satz von verschiedenen Übertragungsraten und eine jeweilige Reservierung eines Kodes mit einem entsprechenden Spreizfaktor enthält. Diese Funktion stellt eine langfristige Ressourcen-Zuweisung der angeforderten Funkkanal-Ressourcen zur Verfügung und kann einen sogenannten statistischen Multiplex-Vorteil, der durch den gegenseitigen Ausgleich des Übertragungsratbedarfs von Trägern mit variabler Bitrate entsteht, berücksichtigen.

Die RRC-Schicht empfängt Pfaddämpfungsmessungen von verschiedenen Teilnehmerstationen und steuert die Übertragungsrate bestimmter ausgewählter Teilnehmerstationen unter Verwendung der Signalisierungsprozedur innerhalb der RRC-Schicht. Dabei können beispielsweise folgende zwei Prozeduren für die Anpassung der Übertragungsraten der jeweiligen Träger an die aktuell verfügbaren Übertragungskapazitäten verwendet werden.

Unter Verwendung einer Transportformat-Set-Rekonfigurations-Prozedur kann die Übertragungsrate verändert werden. Dieses wird von der Auslastungs- und Verbindungsannahme-Funktion eingeleitet und kann auf Pfaddämpfungsmessungen, die von der jeweiligen Teilnehmerstation beispielsweise für Handover-Zwecke durchgeführt werden, basieren. Dabei kann sowohl die Pfaddämpfung zur eigenen Basisfunkstation als auch die Pfaddämpfung zu benachbarten Basisfunkstationen in die Zuweisung einfließen.

Eine weitere bedeutende RRC-Signal-Prozedur ist die Transportformat-Beschränkung, welche für die Reduzierung der aktuellen Übertragungsrate verwendet werden kann. Eine Übertragungsraten-Beschränkung von Nicht-Echtzeit-Diensten mit einer hohen Pfaddämpfung ist ein effizientes Mittel, um die Intensität, Häufigkeit und Dauer einer Überlastsituation zu vermindern. Diese Signalisierungs-Prozedur wird von der Überlast-Kontrollfunktion angefordert und kann wiederum auf den Pfaddämpfungsmessungen der Teilnehmerstationen basieren. Allgemein ist es sinnvoll, nur die Übertragungsrate einer oder mehrerer Verbindungen mit einer großen Pfaddämpfung bzw. einer großen Sendeleistung zu reduzieren, als die Übertragungsraten aller Verbindungen unabhängig von individuellen Pfaddämpfungen oder Sendeleistungen gleichmäßig zu verringern.

Eine zweite beispielhafte Implementierungsmöglichkeit des Verfahrens kann innerhalb der Media Access Control (MAC) - Schicht im Sinne einer sogenannten kurzfristigen Ressourcen-Zuweisung (Packet Scheduling) erfolgen. Die MAC-Funktion ist nach dem ISO-OSI-Schichtenmodell der Schicht 2 zugeordnet.

Die MAC-Schicht ist für die Nutzung der verschiedenen physikalischen Verkehrskanäle (TCH) verantwortlich. Die MAC-Schicht wählt ein bestimmtes Transportformat, im wesentlichen eine bestimmte Übertragungsrate, aus dem Satz von Transportformaten aus, der wie beschrieben beim Verbindungsaufbau definiert wird. Um eine gerechte oder priorisierte Verteilung der verfügbaren Bandbreite in Abhängigkeit von den aktuellen Anforderungen der verschiedenen Träger zu gewährleisten, können entsprechende Packet Scheduling-Algorithmen verwendet werden.

Die auf der Sendeleistung basierende Übertragungsraten-Zuweisung erfordert eine Signalisierung für die absolute oder relative Sendeleistung jedes Trägers einer Basisfunkstation zu der Funknetzsteuerung RNC über die Iub-Schnittstelle, wie in der Fig. 1 offenbart ist. Dieses kann beispielsweise durch ein Hinzufügen eines entsprechenden Feldes innerhalb des Rahmen-Protokolls, das auf der Iub-Schnittstelle für die Übertragung von Transportblöcken zwischen der Basisfunkstation und der Funknetzsteuerung definiert ist, erreicht werden. Eine andere Möglichkeit ist eine Nutzung eigenständiger Signalisierungsnachrichten, die entweder periodisch oder ereignisgesteuert von einer Basisfunkstation zu der Funknetzsteuerung übertragen werden. In diesem Fall wird es möglich, die vorgeschlagene Strategie für die Zuweisung der Übertragungsrate innerhalb der Media Access Control - Schicht zu nutzen. Die MAC-Schicht wählt ein passendes Transportformat, insbesondere eine bestimmte Übertragungsrate, aus dem Satz von Transportformaten aus. Die MAC-Einrichtung, welche für die Auswahl des Transportformates auf dedizierten Kanälen verantwortlich ist, berücksichtigt allgemein lediglich den Pufferstatus der korrespondierenden Teilnehmerstationen bei der Scheduling-Entscheidungsfindung. Die zusätzliche Betrachtung der Pfaddämpfung oder die Betrachtung der Sendeleistung und des Pufferstatus der verbundenen Träger bieten ein großes Potential für eine Optimierung des gesamten Systemdurchsatzes und einer gerechten Verteilung der Sendeleistung in Abwärtsrichtung, welche die reale Übertragungs-Ressource in einem Funksystem mit einem CDMA-Verfahren darstellt.

Falls sich beispielsweise eine Verbindung in einem sogenannten Soft Handover-Zustand befindet, d.h. falls die Signalübertragung in Abwärtsrichtung parallel in mehreren Funkzellen erfolgt, müssen alle möglichen Ausbreitungswege der Signale bei der Zuweisung der Übertragungsrate berücksichtigt werden. Dieses kann beispielsweise dadurch geschehen, daß die Übertragungsrate so gewählt wird, daß sie auf allen Übertragungswegen keine Beeinträchtigung der Gesamt-Übertragungskapazität des Systems hervorruft - Auswahl der minimalen Übertragungsrate.

Wenn die Sendeleistung über die Iub-Schnittstelle zur Funknetzsteuerung signalisiert wird, kann eine leistungsbasierte Bitratenzuweisung auch auf einem sogenannten Shared Channel, wie er für das zukünftige UMTS-Mobilfunksystem vorgeschlagen wird, verwendet werden. Bei dieser Art Transportkanal werden die Bandbreitenzuteilung und das Packet Scheduling jeweils von der MAC-Schicht durchgeführt. Diese Zuteilungs- und Scheduling-Entscheidungen sollten auch hier wieder auf den benötigten Ressourcen (Pufferstatus der verschiedenen Träger) und den verfügbaren Ressourcen (Sendeleistung oder Pfaddämpfung) zur Optimierung des möglichen Datendurchsatzes basieren.

Die beschriebenen Implementierungen können für unterschiedliche Dienstetypen genutzt werden.

Die Verminderung der Übertragungsrate ist in erster Linie für Nicht-Echtzeit-Dienste sinnvoll, da bei diesen Diensten die Datenpakete gepuffert werden können, wenn die Senderate geringer ist als die Ankunftsrate neuer Datenpakete.

Zusätzlich ist es möglich, die erfindungsgemäße Zuweisungsstrategie für Echtzeit-Dienste mit einer adaptiver Quellenrate zu nutzen. Dieses erfordert jedoch eine Kontrolle des Quellkodierers mittels expliziter Signalisierungsnachrichten, die vom Funksystem an die Transkodier-Einheit gesendet werden. Diese Methode kann für adaptive Sprachcodecs, welche die Standard-Codecs in dem UMTS-Mobilfunksystem darstellen, angewendet werden. Die Übertragungsrate der Codecs wird dann in Abhängigkeit von der jeweiligen Pfaddämpfung bzw. der Sendeleistung der korrespondierenden Träger ausgewählt.

Das beschriebene Verfahren für die Übertragungsraten-Zuweisung läßt weitere Anwendungen zu, die für das zukünftige UMTS-Mobilfunksystem bedeutsam sein können. Dieses Verfahren ist generell anwendbar, da Interzell- und Intrazell-Interferenzen stets abhängig von der Pfaddämpfung der verschiedenen Verbindungen sind. Dieses bedeutet, daß jede Teilnehmerstation, deren Interferenzsituation hauptsächlich durch Interzell-Interferenzen dominiert werden (und die in hohem Maße selbst Interzell-Interferenzen hervorruft), mit einer relativ niedrigen Übertragungsrate empfangen bzw. senden sollte, wohingegen eine Teilnehmerstation, die hauptsächlich Intrazell-Interferenzen erleidet und generiert, mit einer höheren Übertragungsrate empfangen bzw. senden sollte. Aus diesem Grund ist das erfindungsgemäße Verfahren wesentlich breiter einsetzbar als vorangehend beschrieben. Dieses soll anhand folgender Beispiele erläutert werden.

Das vorgeschlagene Verfahren kann ebenso für die Signalübertragung in Aufwärtsrichtung angewendet werden. Hierdurch kann der gesamte Systemdurchsatz durch die Zuweisung einer höheren Übertragungsrate zu den Teilnehmerstationen mit einer geringen Pfaddämpfung zu der entsprechenden Basisfunkstation, in dessen Funkversorgungsbereich sich die Teilnehmerstation befindet, erhöht werden. Diese Verfahrensweise bietet beispielsweise eine Erhöhung der Übertragungskapazität für ein im FDD-Modus betriebenes Breitband-CDMA-System.

Diese Situation verbessert sich noch, wenn entsprechend der Übertragung in Abwärtsrichtung auch in der Aufwärtsrichtung orthogonale Spreizkodes verwendet werden oder in der Basisfunkstation ein Joint-Detection-Verfahren durchgeführt wird. Diese Optionen ermöglichen vorteilhaft eine effektive Unterdrückung von auftretenden Intrazell-Interferenzen. In diesem Fall ist die Systemkapazität in der Aufwärtsrichtung hauptsächlich durch Interzell-Interferenzen beschränkt. Die Interzell-Interferenzen können verringert werden, wenn die Übertragungsrate von Teilnehmerstationen am Rande der Funkzelle reduziert und die Übertragungsrate von Teilnehmerstationen mit einer geringen Pfaddämpfung erhöht werden. Die Sendeleistung ist dabei ein Maß für den Umfang von Interzell-Interferenzen, die von einer Teilnehmerstation erzeugt werden. Es können dieselben Implementationsoptionen, wie sie vorangehend für die Abwärtsrichtung erläutert wurden, angewendet werden.

Das beschriebene Verfahren kann in gleicher Weise in anderen Funk-Kommunikationssystemen mit einem CDMA-Verfahren eingesetzt werden. Beispiele hierfür sind

- TDD-Modus im UMTS-Mobilfunksystem,
- Direct Sequence CDMA,
- Frequenz-Sprung-CDMA (Frequency Hopping),
- Zeit-Sprung-CDMA (Time Hopping).

**Patentansprüche**

1. Verfahren zur Zuweisung von Übertragungskapazität zu Verbindungen in einem Funk-Kommunikationssystem,
   **dadurch gekennzeichnet**,
   daß einer Verbindung über eine Funkschnittstelle zwischen einer Basisfunkstation (NB) und einer Teilnehmerstation (UE, UE1, UE2) eine Übertragungsrate (B) abhängig von einer verbindungsindividuellen Pfaddämpfung der Funkschnittstelle zugewiesen wird.

2. Verfahren nach Anspruch 1,
   **dadurch gekennzeichnet**,
   daß die Übertragungsrate (B) abhängig von einer Distanz der Teilnehmerstation (UE, UE1, UE2) zu der Basisfunkstation (NB) zugewiesen wird.

3. Verfahren nach Anspruch 1 oder 2,
   **dadurch gekennzeichnet**,
   daß die Übertragungsrate (B) abhängig von einer Interferenzsituation am Aufenthaltsort der Teilnehmerstation (UE, UE1, UE2) in einer Funkzelle (Z) der Basisfunkstation (NB) zugewiesen wird.

4. Verfahren nach einem vorhergehenden Anspruch,
   **dadurch gekennzeichnet**,
   daß zumindest ein auf der Verbindung zu übertragender Dienst mit einer variablen Übertragungsrate (B) übertragbar ist.

**5.** Verfahren nach dem vorhergehenden Anspruch,
**dadurch gekennzeichnet**,
daß der zu übertragende Dienst ein Nicht-Echtzeit-Dienst und/oder ein Echtzeit-Dienst ist, wobei für den Fall eines Echtzeit-Dienstes eine adaptive Quellenkodierung durchgeführt wird.

**6.** Verfahren nach einem vorhergehenden Anspruch,
**dadurch gekennzeichnet**,
daß für ein jeweiliges Spektrum von Pfaddämpfungen (PL) eine bestimmte Übertragungsrate (B) zugewiesen wird.

**7.** Verfahren nach einem vorhergehenden Anspruch,
**dadurch gekennzeichnet**,
daß die Übertragungsrate (B) zusätzlich abhängig von einer relativen oder absoluten Sendeleistung (P) für die Verbindung variiert wird.

**8.** Verfahren nach einem vorhergehenden Anspruch,
**dadurch gekennzeichnet**,
daß die Übertragungsrate (B) zusätzlich abhängig von einer aktuellen Verkehrsbelastung in der Funkzelle (Z) der Basisfunkstation (NB) variiert wird.

**9.** Verfahren nach einem vorhergehenden Anspruch,
**dadurch gekennzeichnet**,
daß die Übertragungsrate (B) in der Abwärtsrichtung (DL) von der Basisfunkstation (NB) zu der Teilnehmerstation (UE, UE1, UE2) und/oder in der Aufwärtsrichtung (UL) von der Teilnehmerstation (UE, UE1, UE2) zu der Basisfunkstation (NB) abhängig von der jeweiligen Pfaddämpfung (PL) variiert wird.

**10.** Verfahren nach einem vorhergehenden Anspruch,
**dadurch gekennzeichnet**,
daß in dem Funk-Kommunikationssystem eine Teilnehmerseparierung gemäß einem CDMA-Verfahren durchgeführt wird.

**11.** Verfahren nach dem vorhergehenden Anspruch,
**dadurch gekennzeichnet**,
daß in der Abwärtsrichtung (DL) und/oder in der Aufwärtsrichtung (UL) orthogonale Spreizkodes verwendet werden.

**12.** Verfahren nach Anspruch 10 oder 11,
**dadurch gekennzeichnet**,
daß der Verbindung ein Satz von Übertragungsraten (B) zur Verfügung gestellt wird, wobei die jeweils zugewiesene Übertragungsrate (B) durch einen Spreizkode und einen bestimmten Spreizfaktor definiert ist.

**13.** Verfahren nach einem vorhergehenden Anspruch,
**dadurch gekennzeichnet**,
daß eine Pfaddämpfungs- und/oder Sendeleistungs-basierte Langzeit-Übertragungsratenzuweisung von einer Radio Resource Control-Schicht (RRC-Layer) des Funk-Kommunikationssystems durchgeführt wird.

**14.** Verfahren nach Anspruch 13,
**dadurch gekennzeichnet**,
daß die Übertragungsrate (B) unter Verwendung einer Transportformat-Set-Konfigurations/Rekonfigurations-Prozedur der RRC-Schicht verändert wird.

**15.** Verfahren nach Anspruch 13,
**dadurch gekennzeichnet**,
daß die Übertragungsrate (B) unter Verwendung einer Transportformat-Set-Beschränkungs-Prozedur der RRC-Schicht verändert wird.

**16.** Verfahren nach Anspruch 13,

**dadurch gekennzeichnet**,
daß die Übertragungsrate (B) von einer Auslastungs- und Verbindungsannahme-Kontroll-Funktion der RRC-Schicht zugeteilt wird.

**17.** Verfahren nach einem der Ansprüche 1 bis 12,
**dadurch gekennzeichnet**,
daß von einer Media Access Control-Schicht (MAC-Layer) ein passendes Transportformat aus einem Satz von verschiedenen Transportformaten, die bei einem Verbindungsaufbau definiert werden, ausgewählt wird.

**18.** Verfahren nach dem vorhergehenden Anspruch,
**dadurch gekennzeichnet**,
daß von der MAC-Schicht ein passendes Transportformat aus dem Satz Transportformate in einer Soft Handover-Situation unter Berücksichtigung aller möglichen Signalpfade ausgewählt wird.

**19.** Verfahren nach einem vorhergehenden Anspruch,
**dadurch gekennzeichnet**,
daß die Zuweisung der Übertragungsrate (B) auf Pfaddämpfungsmessungen, die von der Teilnehmerstation (UE, UE1, UE2) für Handover-Zwecke durchgeführt werden, beruht.

**20.** Verfahren nach einem vorhergehenden Anspruch,
**dadurch gekennzeichnet**,
daß eine Veränderung der aktuellen Übertragungsrate (B) von einer Überlast-Kontrollfunktion aufgrund von Pfaddämpfungsmessungen der Teilnehmerstation (UE) eingeleitet werden.

**21.** Verfahren nach einem vorhergehenden Anspruch,
**dadurch gekennzeichnet**,
daß die Signalisierung der Sendeleistung (P) eines jeweiligen Trägers der Basisfunkstation (NB) zu einer Funknetzsteuerung (RNC) über die Iub-Schnittstelle erfolgt.

**22.** Verfahren nach Anspruch 21,
**dadurch gekennzeichnet**,
daß die Signalisierung durch ein Hinzufügen eines entsprechenden Feldes innerhalb des Iub/Iur-User-Rahmen-Protokolls erfolgt.

**23.** Verfahren nach Anspruch 21 oder 22,
**dadurch gekennzeichnet**,
daß die Signalisierung durch eigenständige periodische oder ereignisgesteuerte Signalisierungsnachrichten erfolgt.

**24.** Verfahren nach einem vorhergehenden Anspruch,
**dadurch gekennzeichnet**,
daß die Zuweisung der Übertragungsrate (B) abhängig von einer Sendeleistung (P) zusätzlich für einen Shared Channel in der Abwärtsrichtung (DL) durchgeführt wird.

**25.** Verfahren nach einem vorhergehenden Anspruch,
**dadurch gekennzeichnet**,
daß in der Abwärtsrichtung (DL) und/oder in der Aufwärtsrichtung (UL) empfangsseitig ein Joint-Detection-Verfahren durchgeführt wird.

**26.** Verfahren nach einem der vorhergehenden Ansprüche,
**dadurch gekennzeichnet**,
daß die Funkschnittstelle gemäß einem TDD-Verfahren organisiert ist, das mehrere, jeweils einen Zeitrahmen bildenden Zeitschlitzen nutzt, wobei eine Übertragung in Abwärtsrichtung (DL) und in Aufwärtsrichtung (UL) zeitlich getrennt in einem gleichen Frequenzband erfolgt.

**27.** Verfahren nach einem der vorhergehenden Ansprüche,
**dadurch gekennzeichnet**,
daß das Funk-Kommunikationssystem als ein Mobilfunksystem oder als ein drahtloses Teilnehmeranschlußsytem ausgestaltet ist.

28. Funk-Kommunikationssystem mit zumindest einer Basisfunkstation (NB) und zumindest einer Teilnehmerstation (UE) zur Durchführung des Verfahrens nach einem der vohergehenden Ansprüche.

Fig. 1

Z

UE

NB

DL

UL

UE

NB

Z

NB

Z

lub

OMC

RNC

MSC
SGSN

PSTN
ISDN
IP-Netz

(Stand der Technik)

## Fig. 2

# Fig. 3

| Parameter | Strategie 1 | Strategie 2 | Strategie 3 |
|---|---|---|---|
| Anzahl Teilneh-mer mit 8 kbit/s | 40 | 13 | 13 |
| Anzahl Teilneh-mer mit 16 kbit/s | 0 | 27 | 27 |
| Gesamt-Übertra-gungsrate kbit/s | 320 | 536 | 536 |
| Gesamt-Sende-leistung im DL (dBm) | 23,4 | 23,6 | 31,7 |